(19) Europäisches Patentamt
European Patent Office
Office européen des brevets

(11) Publication number: **0 373 600 B1**

(12) # EUROPEAN PATENT SPECIFICATION

(45) Date of publication of patent specification: **15.06.94**

(51) Int. Cl.5: **C23F 11/14**, C23F 11/12

(21) Application number: **89122951.0**

(22) Date of filing: **12.12.89**

The file contains technical information submitted after the application was filed and not included in this specification

(54) **Rust and corrosion preventive compounds.**

(30) Priority: **15.12.88 JP 314949/88**

(43) Date of publication of application:
**20.06.90 Bulletin 90/25**

(45) Publication of the grant of the patent:
**15.06.94 Bulletin 94/24**

(84) Designated Contracting States:
**BE DE FR GB IT NL**

(56) References cited:
**DE-B- 1 254 938**
**US-A- 1 903 287**
**US-A- 4 734 258**

(73) Proprietor: **IDEMITSU KOSAN COMPANY LIMITED**
**1-1, Marunouchi 3-chome**
**Chiyoda-ku**
**Tokyo 100(JP)**

(72) Inventor: **Kanamori, Hideo**
**c/o Idemitsu Kosan Co., Ltd.**
**24-4, Anesakikaigan**
**Ichihara-shi Chiba-ken(JP)**

(74) Representative: **Strehl Schübel-Hopf Groening & Partner**
**Maximilianstrasse 54**
**D-80538 München (DE)**

**EP 0 373 600 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

(a) Field of the Invention

The present invention relates to the use of a rust and corrosion preventive compound as an additive agent for rust prevention and corrosion prevention, a base material for rust and corrosion preventive antifreezing fluids, and a rust and corrosion preventive synthetic lubricant.

More specifically, the present invention relates to a novel synthetic lubricant which consists essentially of a specific morpholine compound having rust and corrosion preventing properties, having excellent abrasion resistance and anti-seizure property, and further having a high viscosity index and a good low temperature fluidity; to a novel additive agent for rust and corrosion prevention consisting essentially of the morpholine compound; and to the use of the morpholine compound, in a hydrous fluid which has and maintains excellent rust and corrosion preventing properties and can be suitably used as, for example, hydraulic fluids and antifreezing fluids.

(b) Description of the Related Art

While there are various kinds of known lubricants, there is still a demand for lubricants which have excellent abrasion resistance and anti-seizure property, have a high viscosity index and low pour point and, further, excel in rust and corrosion preventing property.

On the other hand, the conventional antifreezing fluids and water-glycol type hydraulic fluids are hydrous fluids comprising an alkylene glycol, such as ethylene glycol, propylene glycol, and dipropylene glycol, and water. Since these hydrous fluids cause troubles of corrosion and rusting when used alone, corrosion preventives and rust preventives are added to them in practical use.

However, beside the lack of enough rust preventing and corrosion preventing properties, the conventional corrosion preventives and rust preventives cannot maintain the original rust preventing and corrosion preventing properties because of their fugacity and tendency to decompose during use, causing troubles, for example, leak-out from pipes due to corrosion and the loading of filters with corroded products.

There has also been a demand for additive agents for various kinds of lubricants and various kinds of hydrous fluids, which can improve the properties of the lubricants and hydrous fluids including rust preventing and corrosion preventing properties.

As a method for preventing corrosion US-4 734 258 describes the treatment of water with morpholinohexose reductone in order to scavenge dissolved oxygen from industrial waters. This method makes use of the strong reductive activity for which reductones are well known.
US-1 903 287 discloses corrosion inhibitors suitable for use in water and aqueous solutions which consist of morpholine or a substituted morpholine. As examples for the substituted morpholines there are stated dimethyl morpholine and ethanol morpholine.

Oxethylated derivatives of 4-morpholineethanol are described in Chemical Abstracts, Volume 65 (1966), Column No. 7173, and Volume 94 (1981), Abstract No. 31311x. The only use mentioned for these compounds is as a catalyst in the preparation of polyurethanes.

SUMMARY OF THE INVENTION

It is an object of the present invention to use a rust and corrosion preventive morpholine compound having excellent rust preventing and corrosion preventing properties, as a component of a hydrous fluid which is free from the above-described problems, has improved rust preventing and corrosion preventing properties, and maintains the good properties for a long period, and therefore, is suitable for use in antifreezing fluids, hydraulic fluids, or the base material therefor.

It is another object of the present invention to provide a novel additive agent for rust prevention and corrosion prevention, which can endow various kinds of lubricants and various kinds of hydrous fluids with excellent rust preventing and corrosion preventing properties.

It is still another object of the present invention to provide a novel synthetic lubricant which not only excels in rust preventing and corrosion preventing properties but also has other excellent properties including excellent abrasion resistance and anti-seizure property, a high viscosity index, and a good low temperature fluidity.

It is still another object of the present invention to provide a rust and corrosion preventive base material for antifreezing fluid, the base material consisting essentially of the above-described morpholine compound.

The inventor repeated studies to attain the above-described objects, and has found that specific morpholine compounds excel in rust preventing and corrosion preventing properties, are useful as rust and corrosion preventive compounds, and can endow various kinds of lubricants and hydrous fluids with rust preventing and corrosion preventing properties when mixed into them as an additive for rust prevention and corrosion prevention.

The inventor has further found that the morpholine compounds, mixtures thereof or nonaqueous compositions containing them can be used as novel synthetic lubricants (i.e., lubricant oils or base oils thereof) which have excellent abrasion resistance and anti-seizure property, a high viscosity index, a good low temperature fluidity, and rust preventing and corrosion preventing properties.

The inventor has further found that hydrous fluids containing one of the morpholine compounds or a mixture thereof and water can be used as effective rust and corrosion preventive base materials of hydrous fluid system which excel in corrosion preventing property and rust preventing property and, as well, maintain these good properties stably for a long period, and that these hydrous fluids can be used, without addition of the conventional anticorrosives nor rust preventives, as novel water-glycol hydraulic fluids or novel antifreezing fluids and exhibit excellent properties including excellent corrosion preventing and rust preventing properties and long duration of these properties, thereby ensuring a stable function over a long period.

On the basis of these knowledge, the inventor accomplished the present invention.

The present invention is directed for the use of a corrosion preventive compound represented by the following general formula:

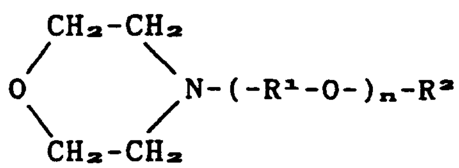

(I)

wherein

n is an integer having a value of from 3 to 300,

each $R^1$ is an alkylene group of from 2 to 4 carbon atoms, an arylene group of from 6 to 30 carbon atoms or a cycloalkylene group of from 6 to 30 carbon atoms, wherein the $R^1$ groups may be identical with or different from one another, and

$R^2$ is hydrogen atom, an alkyl group of from 1 to 30 carbon atoms, an aryl group of from 6 to 30 carbon atoms or a cycloalkyl group of from 6 to 30 carbon atoms, as a component of a rust and corrosion preventive hydrous fluid,

Subject-matter of the present invention is furthermore a rust and corrosion preventive anti-freeze fluid, comprising:

(a) 100 parts by weight of the rust and corrosion preventive compound of the formula (I),

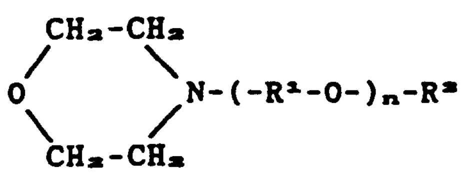

(I)

wherein n is an integer having a value of from 1 to 300, preferably 2 to 100, more preferably 3 to 50, and $R^1$ and $R^2$ is as defined above, provided that the $R^1$ groups may be identical or different, when n is 2 or more.

(b) from 5 to 20,000 parts by weight of water, and

(c) from 0.1 to 10 parts by weight of a corrosion inhibitor.

The present invention further comprises a rust and corrosion preventive glycol-type fluid, comprising

(a) 100 parts by weight in total of the rust and corrosion preventive compound of the formula (I)

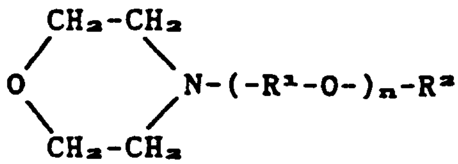

(I)

wherein n is an integer having a value of from 1 to 300, preferably 2 to 100, more preferably 3 to 50, and $R^1$ and $R^2$ is as defined above, provided that the $R^1$ groups may be identical or different, when n is 2 or more, nd water, wherein the weight ratio of compound (I) to water is 80:20 to 20:80,

(b) from 0 to 100 parts by weight of an alkylene glycol,

(c) from 3 to 80 parts by weight of a thickener,

(d) from 1 to 50 parts by weight of an oiliness improver, and

(e) from 0 to 10 parts by weight of a corrosion inhibitor.

A still further subject-matter of the present invention is a rust and corrosion preventive lubricant, comprising:

(a) the rust and corrosion preventive compound of the formula (I),

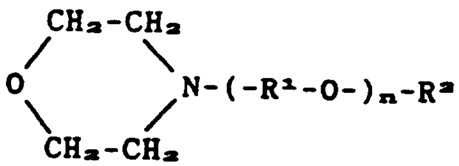

(I)

wherein n is an integer having a value of from 1 to 300, preferably 2 to 100, more preferably 3 to 50, and $R^1$ and $R^2$ is as defined above, provided that the $R^1$ groups may be identical or different, when n is 2 or more, and

(b) a lubricating oil or a lubricating base oil, wherein the lubricating base oil is selected from the group consisting of a mineral oil and a synthetic oil.

DESCRIPTION OF THE PREFERRED EMBODIMENTS

Hereinafter, the compound represented by the general formula (I) (Hereinafter, the compound will sometimes be referred to as morpholine compound.) to be used in the present invention will be described in more detail.

"n" in the formula (I) represents an integer having an upper limit of 300, preferably of 100, more preferably of 50. If the value of n exceeds 300, the viscosity of the compound will become too high to be suitable for lubricating use.

In the embodiment of the present invention which relates to the use of compounds of formula (I) n is an integer of 3 to 300, preferably 3 to 100, and more preferably 3 to 50.

In those embodiments which relate to the rust and corrosion preventive anti-freeze fluid, the rust and corrosion preventive water glycol-type fluid and the rust and corrosion preventive lubricant n is an integer having a value of from 1 to 300, preferably from 2 to 100, and more preferably from 3 to 50.

When $R^1$ in the formula (I) is an alkylene group, the typical examples of the alkylene group include 1,2-ethylene group; substituted 1,2-ethylene groups such as 1,2-propylene group, 1,2-butylene group, and 2,3-butylene group; 1,3-propylene groups; substituted 1,3-propylene groups such as 1,3-butylene group; and 1,4-butylene group.

When $R^1$ is an arylene group, the typical examples of the arylene group include 1,4-phenylene group, 1,3-phenylene group, 1,2-phenylene group; substituted 1,4-phenylene groups such as 2-methyl-1,4-phenylene group, 2,3-dimethyl-1,4-phenylene group, 2-ethyl-1,4-phenylene group, and 2-propyl-1,4-phenylene groups; substituted 1,3-phenylene groups such as 4-methyl-1,3-phenylene group and 5-methyl-1,3-phenylene group; substituted 1,2-phenylene groups such as 3-methyl-1,2-phenylene group and 4-methyl-1,2-phenylene group; naphthylene groups such as 1,4-naphthylene group and 2,5-naphthylene

group; and substituted groups thereof such as alkyl substituted groups thereof.

When $R^1$ is a cycloalkylene group, the typical examples of the cycloalkylene group include
1,4-cyclohexylene group, 1,3-cyclohexylene group,
1,2-cyclohexylene group, 1,5-cyclooctylene group,
1,4-cyclooctylene group, 1,3-cyclooctylene group,
1,2-cyclooctylene group, decalin-1,2-diyl group,
decalin-1,3-diyl group, decalin-1,4-diyl group,
decalin-2,5-diyl group, and substituted groups thereof such as alkyl-substituted groups thereof.

Among these, the preferred $R^1$ groups are alkylene groups of from 2 to 4 carbon atoms, and the especially preferred include 1,2-ethylene group, substituted 1,2-ethylene groups such as 1,2-propylene group, 1,2-butylene group, and 2,3-butylene group, and the most preferred include 1,2-ethylene group and 1,2-propylene group.

When the "n" in the formula (I) is an integer having a value of 2 or more, the group, $-(-R^1-O-)_n-$, may consist of the $-R^1-O-$ groups of the same kind or consist of the $-R^1-O-$ groups of two or more kinds. When $-(-R^1-O-)_n-$consists of the $-R^1-O-$ groups of two or more kinds, the $-R^1-O-$ groups may be bound to one another to form a block state, a random state or an alternating state.

When $R^2$ in the general formula (I) is an alkyl group, typical examples of the alkyl group include linear alkyl groups such as methyl group, ethyl group, n-propyl group, isopropyl group, n-butyl group, isobutyl group, sec-butyl group, tert-butyl group, pentyl group, isopentyl group, sec-pentyl group, neopentyl group, tert-pentyl group, n-hexyl group, isohexyl group, heptyl group, octyl groups, nonyl groups, decyl groups, undecyl groups, dodecyl groups, tetradecyl groups, octadecyl groups, and eicosyl groups; and substituted alkyl groups such as benzyl group, phenetyl group, phenylpropyl groups, and cyclohexylethyl groups.

When $R^2$ is an aryl group, typical examples of $R^2$ include phenyl group; substituted phenyl groups such as o-methylphenyl group, m-methylphenyl group, p-methylphenyl group, p-ethylphenyl group, p-butyl phenyl groups, p-octylphenyl groups, and biphenylyl group; 1-naphthyl group; 2-naphthyl group; and substituted naphthyl groups such as methyl naphthyl groups.

When $R^2$ is a cycloalkyl group, typical examples of the cycloalkyl group include monocyclic cycloalkyl groups such as cyclohexyl group, cycloheptyl group, cyclooctyl group, cyclodecyl group, and cyclododecyl group; polycyclic cycloalkyl groups such as decalin-1-yl group and decalin-2-yl group; and substituted cycloalkyl groups such as methylcyclohexyl groups, ethylcyclohexyl groups, and octylcyclohexyl groups.

The particularly preferred example of $R^2$ is the hydrogen atom.

The compounds represented by the formula (I) may be used individually or in a mixture of two or more of them.

Among the compounds represented by the formula (I), some typical examples of the compound or mixtures thereof which may be suitably used include ethylene oxide (1 to 30 mol) adducts of morpholine, propylene oxide (1 to 30 mol) adducts of morpholine, ethylene oxide (1 to 10 mol) / propylene oxide (1 to 20 mol) adducts of morpholine, and mixtures thereof.

The rust and corrosion preventive compound used in the present invention is useful in the fields where rust preventing and corrosion preventing properties are required, for example, as an additive agent for rust prevention and corrosion prevention; a synthetic lubricant; a base material (an undiluted solution) for rust and corrosion preventive hydrous liquids to be used as water-glycol type hydraulic fluids or antifreezing fluids; and a base material for antifreezing fluids.

The additive agent for rust prevention and corrosion prevention of the present invention consists essentially of one of the compounds represented by the formula (I) or a mixture of two or more of the compounds. The additive agent is mixed into various kinds of compositions to endow them with excellent rust preventing and corrosion preventing properties.

The lubricant of the present invention consists essentially of one of the compounds represented by the formula (I) or a mixture of two or more of the compounds. Other than the compounds represented by the formula (I), the lubricant may contain solvents and various kinds of compounding agents or additive agents which are usually mixed into the conventional lubricating oils and/or the conventional lubricating base oils, such as mineral oil and synthetic lubricating oils.

Through the properties or action of the morpholine compound represented by the formula (I), the lubricant of the present invention has, in addition to excellent rust and corrosion preventing properties, excellent other properties including excellent abrasion resistance and anti-seizure property, a high viscosity index, and a good low temperature fluidity. By utilizing these properties, the lubricant of the present invention can be used in various kinds of fields, and is particularly suited for the purposes for which mineral oil type or synthetic oil type lubricants are used. Concretely, it can particularly effectively used as a gear oil, a bearing oil, a compressor oil, a refrigerator oil, a turbine oil, a hydraulic fluid, a vacuum pump oil, a metal

working oil, a rust preventive oil, a heat treatment oil, a heat transfer oil, a grease, or a base oil therefor.

The hydrous fluid of the present invention comprises at least one compound represented by the formula (I) (component A) and water, and the hydrous fluid may be of either solution form or disperse fluid form such as emulsion. The mixing ratio of the component (A) to water is not particularly limited, but it is appropriate that the hydrous fluid contains 0.01 % by weight or more of the component (A). In addition to water and the component (A), the hydrous fluid may further contain proper amounts of other component, for example, alkylene glycols, thickeners, oiliness improvers, extreme pressure agents, corrosion inhibitors, antifoaming agents, and further, lubricating base oils such as mineral oil and synthetic oils, rust preventives, and emulsifiers.

When the hydrous fluid of the present invention is used as a water-glycol type hydraulic fluid, it is appropriate that the component (A) accounts 80 to 20 % by weight of the sum of the component (A) and water. Further, it is generally desirable to mix a thickener. With regard to the composition of the water-glycol type hydraulic fluid, the preferred water-glycol type hydraulic fluid consists essentially of a total of 100 parts by weight of the component (A) and water, 0 to 100 parts by weight of an alkylene glycol, 3 to 80 parts by weight of a thickener, a total of 1 to 50 parts by weight of an oiliness improver and an extreme pressure agent, and 0 to 10 parts by weight of a corrosion inhibitor.

Some typical examples of the above-described alkylene glycol which may be used in the hydrous fluid of the present invention include ethylene glycol, diethylene glycol, propylene glycol, dipropylene glycol, and butylene glycol. These may be used individually or as a mixture of two or more of them.

The particularly suitable examples of the above-described thickener include ethylene oxide-propylene oxide copolymers having a molecular weight of from about 2,000 to 50,000.

Some examples of the above-described oiliness improver which may be used in the hydrous fluid of the present invention include monocarboxylic acids, particularly fatty acids of from 8 to 30 carbon atoms, polycarboxylic acids such as dicarboxylic acids, and salts thereof with alkali hydroxides, alkylamines, and alkanolamines.

Some examples of the corrosion inhibitor which may be used in the hydrous fluid of the present invention include morpholine, cyclohexylamine, dicyclohexylamine, monoethanolamine, diethanolamine, triethanolamine, diisopropanolamine, triisopropanolamine, benzotriazole, benzothiazole, and EDTA.

The above-described additives such as alkylene glycols, thickeners, oiliness improvers, extreme pressure agents, and corrosion inhibitors are not limited to the compounds illustrated above, and any known compound may be used optionally as each additive, respectively.

When these various kinds of additive agents are to be mixed, they may be used individually or in a combination of two or more of them.

In the manner as described above, the hydrous fluid containing the morpholine compound represented by the formula (I) can be obtained.

By the action of the morpholine compound, the hydrous fluid is improved in the corrosion preventing property and the rust preventing property and as well can maintain the improved properties stably for a long period. Mainly taking advantage of the stable and durable corrosion preventing property and rust preventing property, the hydrous fluid can be used for various purposes, for example, as the water-glycol type hydraulic fluid as described above, other hydrous hydraulic fluids, antifreezing fluids, metal hydraulic fluids, heat treatment fluids for quenching, etc., coolants, heat transfer fluids, or base materials therefor.

The hydrous fluid of the present invention can be particularly suitably used as a water-glycol type hydraulic fluid and an antifreezing fluid. Accordingly, the rust and corrosion preventive compound of the present invention also can be suitably used as the base material for antifreezing fluids.

When the hydrous fluid of the present invention is used as an antifreezing fluid, the antifreezing fluid preferably comprises 100 parts by weight of the morpholine compound represented by the formula (I) (component A), from 5 to 20,000 parts by weight, more preferably from 10 to 1,000 parts by weight of water, and from 0 to 10 parts by weight, more preferably from 0.1 to 10 parts by weight of an corrosion inhibitor, such as morpholine.

Hereinafter, the present invention will be described in more details referring to the following Examples, and the Examples are illustrative and are not to be construed to limit the scope of the present invention.

EXAMPLES 1 TO 9 AND COMPARATIVE EXAMPLES 1 TO 5

EXAMPLES 1 TO 8 AND COMPARATIVE EXAMPLES 1 TO 4

Examples 1 to 7 and Comparative Examples 1 and 2 relate mainly to water-glycol type hydraulic fluids, and in each Example, a sample fluid (test fluid) having the composition as shown in Table 1 was prepared.

Measurements of the initial values of the properties shown in Table 1 were carried out on the sample fluids according to the test methods which will be described later, and an endurance test was carried out on each sample fluid by conducting an open type heat-resistance test and a closed type heat-resistance test. The results are shown in Table 1.

Example 8 and Comparative Examples 3 and 4 relate mainly to antifreezing fluids, and in each Example, a sample fluid (test fluid) having the composition as shown in Table 2 was prepared. In the same manner as in Example 1, measurements of the initial values of the properties shown in Table 2 and an endurance test were carried out. The results are shown in Table 2.

(1) Corrosion behavior test

Corrosion behavior test was conducted in accordance with the antifreezing fluid test of JIS-K-2234.

(2) Vapor inhibitability test

Vapor inhibitability test was conducted in accordance with the vapor inhibitability test for rust preventive oils of JIS-K-2246.

Into a 1-l wide-mouthed bottle placed was 100 mg of a sample fluid, and the bottle was corked with a rubber cork attached with a carbon steel F25C test piece so that the test piece was disposed 100 mm over the sample fluid surface. After allowed to stand for 72 hours at 60 ± 2 °C , the test piece was taken from the bottle and was observed about the generation of rust.

(3) Open type heat-resistance test (Endurance test)

In to a beaker of 600 mm diameter and 90 mm height placed was 100 g of a sample fluid, and the sample fluid was heated to evaporate for 72 hours at 80 °C in a air bath chamber for lubricating oil thermostability test according to JIS-K-2540. Subsequently, the beaker was taken from the air bath chamber and was supplied with water in an amount equal to the amount of the water evaporated from the sample fluid, and measurements of the changes in properties were carried out on the water supplied sample fluid.

(4) Closed type heat-resistance test (Endurance test)

Into a pressure tight closed vessel made of SUS 304 having a bore diameter of 60 mm and a height of 100 mm placed was 500 g of a sample fluid, and was heated for 36 hours at 200 °C . After the vessel was allowed to cool, measurements of the changes in properties were carried out on the sample fluid.

(5) Abrasion resistance test

In accordance with ASTM D 2670, the abrasion resistance test was carried out under the conditions of 300 rpm, 300 Lbs, and 60 minutes, and the change in the weight of the test piece before and after the test was measured.

Table 1 (Water-glycol type hydrolic fluid) notes; EO represents ethylene oxide, PO respresents propylene oxide, and the numerals in the parentheses represent the numbers of molecules added.

| | | | Ex.1 | Ex.2 | Ex.3 | Ex.4 | Ex.5 | Ex.6 | Ex.7 | Comp.Ex.1 | Comp.Ex.2 |
|---|---|---|---|---|---|---|---|---|---|---|---|
| Composition (wt%) | A | Morpholine・EO(3) | 15 | | | | | | | | A commercial *4 hydraulic fluid |
| | | Morpholine・PO(3) | | 15 | | | | | | | |
| | | Morpholine・PO(5) | | | 15 | 40 | | | | | |
| | | Morpholine・PO(10) | | | | | 15 | | | | |
| | | Morpholine・PO(15) | | | | | | 15 | | | |
| | | Morpholine・EO(2) PO(3) | | | | | | | 40 | | |
| | B | Water | 38 | 39 | 40 | 41.5 | 40.5 | 43 | 39.5 | 39.5 | |
| | C | Propylene glycol | 25 | 25 | 25 | 0 | 25 | 25 | 0 | 40 | |
| | | Oiliness improver *1 | 5 | 5 | 5 | 5 | 5 | 5 | 5 | 5 | |
| | | Corrosion inhibitor *2 | 2 | 2 | 2 | 2 | 2 | 2 | 2 | 2 | |
| | | Thickener *3 | 15 | 14 | 13 | 11.5 | 12.5 | 12 | 13.5 | 13.5 | |
| Results | Initial value | Kinematic viscosity(40℃)cst | 46 | 46 | 46 | 46 | 46 | 46 | 46 | 46 | 46 |
| | | Pour point (℃) | -50> | -50> | -50> | -42.5 | -50> | -45 | -50> | -50> | -50 > |
| | | pH | 11.4 | 11.3 | 11.2 | 11.4 | 11.2 | 11.1 | 11.3 | 10.5 | 11.6 |
| | | Abrasion resistance(mg) | 2.1 | 2.0 | 2.0 | 1.8 | 2.2 | 2.0 | 1.9 | 5.8 | 22.8 |
| | | Volatile inhibitability | not rusted | not rusted | not rusted | not rusted | not rusted | not rusted | not rusted | slightly rusted | slightly rusted |
| | Metal corrosion (mg/cm²) | Aluminum | -0.03 | -0.03 | -0.03 | -0.03 | -0.02 | -0.03 | -0.02 | -0.06 | -0.17 |
| | | Cast iron | -0.01 | -0.02 | -0.01 | 0 | 0 | -0.02 | 0 | -0.09 | -0.05 |
| | | Steel | -0.01 | -0.01 | 0 | 0 | -0.01 | 0 | 0 | -0.08 | -0.05 |
| | | Brass | -0.26 | -0.23 | -0.26 | -0.21 | -0.23 | -0.22 | -0.25 | -0.20 | -0.27 |
| | | Copper | -0.11 | -0.12 | -0.12 | -0.12 | -0.11 | -0.12 | -0.13 | -0.13 | -0.12 |
| | Endurance test: Open type heat-resistance test | Appearance | not changed | not changed | not changed | not changed | not changed | not changed | not changed | not changed | reddened |
| | | pH | 11.4 | 11.3 | 11.2 | 11.4 | 11.2 | 11.0 | 11.3 | 9.5 | 8.5 |
| | | Volatile inhibitability | not rusted | not rusted | not rusted | not rusted | not rusted | not rusted | not rusted | severely rusted | severely rusted |
| | Endurance test: Closed type heat-resistance test | Appearance | not changed | not changed | not changed | not changed | not changed | not changed | not changed | not changed | reddenning・precipitation |
| | | pH | 11.3 | 11.6 | 11.1 | 11.4 | 11.1 | 11.0 | 11.3 | 9.7 | 8.9 |
| | | Abrasion Resist. (mg) | 2.1 | 2.0 | 2.0 | 1.6 | 2.1 | 2.1 | 1.9 | 5.6 | 26.5 |

*1 Potassium salt of fatty acid (potassium oleate) *2 Morpholine. *3 Ethylene oxide-propylene oxide copolymer having a molecular weight of about 20,000.
*4 A commercial hydraulic fluid comprising a dipropylene glycol-water base as the main component, oiliness improvers, thickners, and corrosion inhibitors.

Table 2 (Antifreezing fluid)

| | | | Example 8 | Comparative Example 3 | Comparative Example 4 |
|---|---|---|---|---|---|
| Composition | Morpholine·PO(5) | | 46 | 0 | A commercial *5 working fluid |
| | Propylene glycol | | 0 | 46 | |
| | Corrosion inhibitor | | 4 | 4 | |
| | Water | | 50 | 50 | |
| Results | Initial value | Kinematic viscosity (40℃) cst | 7 | 7 | 8 |
| | | Fluid point (℃) | -50 > | -50 > | -50 > |
| | | pH | 10.8 | 9.5 | 9.2 |
| | | Volatile inhibitability | not rusted | rusted but not severely | rusted but not severely |
| | Metal corrosion (mg/cm²) | Aluminum | −0.04 | −0.08 | −0.07 |
| | | Cast iron | −0.01 | +0.06 | +0.08 |
| | | Steel | +0.01 | −0.04 | −0.03 |
| | | Brass | −0.08 | −0.10 | −0.15 |
| | | Copper | −0.12 | −0.15 | −0.14 |
| | Endurance test: Open type heat-reistance test | Appearance | not changed | not changed | Suspended matter generated |
| | | pH | 10.7 | 8.6 | 8.1 |
| | | volatile inhibitability | not rusted | severely rusted | severely rusted |
| | Endurance test: Closed type heat-resistance test | Appearance | not changed | not changed | reddened |
| | | pH | 10.6 | 8.9 | 8.2 |

*5 A commercial antifreezing fluid comprising ethylene glycol and water as the main components.

From the results shown in Table 1, it is apparent that the water-glycol type hydraulic fluid of the present invention excels in the following points.

That is, all water-glycol type hydraulic fluids (Examples 1 to 7) containing morpholine•EO or morpholine•POexhibited high initial pH values (pH values of the fresh fluids), and exhibited good abrasion resistance and good vapor inhibitability. Also, there was observed no change in appearance nor decrease in

pH value before and after the both endurance tests under open condition and closed condition. Further, there was no decrease in the vapor inhibitability after the open type heat-resistance test nor decrease in the abrasion resistance after the closed type heat-resistance test. On the other hand, those without morpholine•EO nor morpholine•PO (Comparative Example 1 and 2) had insufficient initial values of vapor inhibitability, and exhibited large changes in appearance after the endurance test and considerable decreases in the pH value, the rust preventive property, and the abrasion resistance.

From the results shown in Table 2, it is apparent that the antifreezing fluid which is an aqueous solution containing the morpholine compound of the present invention superiors in the properties as described above to those which contain no morpholine compound.

EXAMPLE 9 AND COMPARATIVE EXAMPLE 5

As to a lubricant consisting of the morpholine compound of the present invention (morpholine•PO(5)) and a mineral oil (solvent refined 150 neutral oil), various kinds of properties shown in Table 3 were measured. The results are shown in Table 3.

Table 3

| | Example 9 | Comparative example 5 |
|---|---|---|
| Viscosity (cst) (40 °C ) | 23.58 | 27.86 |
| Viscosity (cst) (100 °C ) | 4.977 | 5.011 |
| Viscosity index | 142 | 105 |
| Pour point (°C ) | - 50 > | - 17.5 |
| Abrasion resistance (mg) | 7.3 | 23.0 |
| Anti-seizure property (LOS) *1 | 2500 | 400 |
| Rust preventing property *2 | not rusted. | severely rusted. |

*1 Anti-seizure property was measured in accordance with ASTM D 3233 FALEX test.
*2 A test according to JIS K 2510 was conducted for 24 hours by using distilled water.

## Claims

**1.** The use of a compound of the following formula;

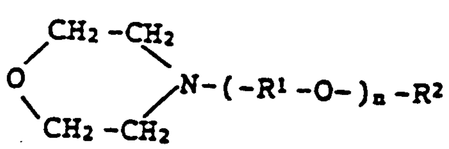

(I)

wherein

n is an integer of 3 to 300,

each $R^1$ is an alkylene group of 2 to 4 carbon atoms, an arylene group of 6 to 30 carbon atoms or a cycloalkylene group of 6 to 30 carbon atoms, with the proviso that the $R^1$ groups are identical with or different from one another, and

$R^2$ is a hydrogen atom, an alkyl group of from 1 to 30 carbon atoms, an aryl group of from 6 to 30 carbon atoms or a cycloalkyl group of from 6 to 30 carbon atoms,

as a component of a rust and corrosion preventive hydrous fluid.

**2.** The use as claimed in claim 1, wherein $R^1$ is selected from the group consisting of a 1,2-propylene group, a 1,2-butylene group, a 2,3-butylene group, a 1,3-butylene group, a 1,4-butylene group, a 1,3-propylene group, a 2-methyl-1,4-phenylene group, a 2,3-dimethyl-1,4-phenylene group, a 2-ethyl-1,4-phenylene group, 2-propyl-1,4-phenylene group, a 4-methyl-1,3-phenylene group, a 5-methyl-1,3,-phenylene group, a 3-methyl-1,2-phenylene group, a 4-methyl-1,2-phenylene group, a 1,4-naphthylene group, a 2,5-naphthylene group, a 1,4-cyclohexylene group, a 1,3-cyclohexylene group, a 1,2-cyclohexylene group, 1,5-cyclooctylene group, a 1,4-cyclooctylene group, a 1,3-cyclooctylene group, a 1,2-cyclooctylene group, a decalin-1,2-diyl group, a decalin-1,3-diyl group, a decalin-1,4-diyl group and a decalin-2,5-diyl group and $R^2$ is selected from the group consisting of a methyl group, an ethyl group, a n-propyl group, an isopropyl group, a n-butyl group, an isobutyl group, a sec-butyl group, a tert-butyl group, a pentyl group, an isopentyl group, a sec-pentyl group, a neopentyl group, a tert-pentyl group, a n-hexyl group, an isohexyl group, a heptyl group, an octyl group, a nonyl group, a decyl group, an undecyl group, a dodecyl group, a tetradecyl group, an octodecyl group, an eicosyl group, a benzyl group, a phenethyl group, a phenylpropyl group, a cyclohexylethyl group, a phenyl group, an o-methylphenyl group, a m-methylphenyl group, a p-methylphenyl group, a p-ethylphenyl group, a p-butyl phenyl group, a p-octylphenyl group, a 1-naphthyl group, a 2-naphthyl group, a methyl naphthyl group, a cyclohexyl group, a cycloheptyl group, a cyclooctyl group, a cyclodecyl group, a cyclododecyl group, a decalin-1-yl group, a decalin-2-yl group, a methylcyclohexyl group, an ethylcyclohexyl group and an octylcyclohexyl group.

3. The use as claimed in claim 1, wherein, in the formula (I),
$R^1$ is an alkylene group of 2 to 4 carbon atoms, and $R^2$ is a hydrogen atom.

4. The use as claimed in claim 3, wherein, in the formula (I), n is an integer of 3 to 50 and $R^1$ is a 1,2-ethylene group or a 1,2-propylene group.

5. The use as claimed in claim 4, wherein, in the formula (I), n is an integer of 3 to 15.

6. A rust and corrosion preventive antifreeze fluid comprising:
(a) 100 parts by weight of a rust and corrosion preventive compound of the following formula:

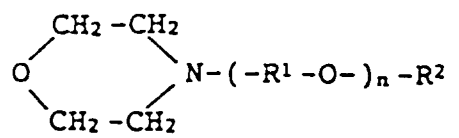

(I)

wherein
n is an integer of from 1 to 300,
each $R^1$ is an alkylene group of 2 to 4 carbon atoms, an arylene group of 6 to 30 carbon atoms or a cycloalkylene group of 6 to 30 carbon atoms, with the proviso that the $R^1$ groups are identical with or different from one another, and
$R^2$ is hydrogen atom, an alkyl group of 1 to 30 carbon atoms, an aryl group of 6 to 30 carbon atoms or a cycloalkyl group of 6 to 30 carbon atoms,
(b) from 5 to 20,000 parts by weight of water, and
(c) from 0.1 to 10 parts by weight of a corrosion inhibitor.

7. The rust and corrosion preventive anti-freeze fluid as claimed in claim 6, wherein $R^1$ is selected from the group consisting of a 1,2-propylene group, a 1,2-butylene group, a 2,3-butylene group, a 1,3-butylene group, a 1,4-butylene group, a 1,3-propylene group, a 2-methyl-1,4-phenylene group, a 2,3-dimethyl-1,4-phenylene group, a 2-ethyl-1,4-phenylene group, 2-propyl-1,4-phenylene group, a 4-methyl-1,3-phenylene group, a 5-methyl-1,3,-phenylene group, a 3-methyl-1,2-phenylene group, a 4-methyl-1,2-phenylene group, a 1,4-naphthylene group, a 2,5-naphthylene group, a 1,4-cyclohexylene group, a 1,3-cyclohexylene group, a 1,2-cyclohexylene group, 1,5-cyclooctylene group, a 1,4-cyclooctylene group, a 1,3-cyclooctylene group, a 1,2-cyclooctylene group, a decalin-1,2-diyl group, a decalin-1,3-diyl group, a decalin-1,4-diyl group and a decalin-2,5-diyl group and $R^2$ is selected from the group consisting of a methyl group, an ethyl group, a n-propyl group, an isopropyl group, a n-butyl group, an isobutyl group, a sec-butyl group, a tert-butyl group, a pentyl group, an isopentyl group, a sec-pentyl group, a neopentyl group, a tert-pentyl group, a n-hexyl group, an isohexyl group, a heptyl group, an octyl group, a nonyl group, a decyl group, an undecyl group, a dodecyl group, a tetradecyl group, an octodecyl group, an eicosyl group, a benzyl group, a phenethyl group, a phenylpropyl group, a

cyclohexylethyl group, a phenyl group, an o-methylphenyl group, a m-methylphenyl group, a p-methylphenyl group, a p-ethylphenyl group, a p-butyl phenyl group, a p-octylphenyl group, a 1-naphthyl group, a 2-naphthyl group, a methyl naphthyl group, a cyclohexyl group, a cycloheptyl group, a cyclooctyl group, a cyclodecyl group, a cyclododecyl group, a decalin-1-yl group, a decalin-2-yl group, a methylcyclohexyl group, an ethylcyclohexyl group and an octylcyclohexyl group.

**8.** The rust and corrosion preventive antifreeze fluid as claimed in claim 6, wherein, in the formula (I), n is an integer of 2 to 100, $R^1$ is an alkylene group of 2 to 4 carbon atoms, and $R^2$ is a hydrogen atom.

**9.** The rust and corrosion preventive antifreeze fluid as claimed in claim 8, wherein the corrosion inhibitor is at least one selected from the group consisting of morpholine, cyclohexylamine, dicyclohexylamine, monoethanolamine, diethanolamine, triethanolamine, diisopropanolamine, triisopropanolamine, benzotriazole, benzothiazole and ethylenediaminetetraacetic acid.

**10.** The rust and corrosion preventive antifreeze fluid as claimed in any of the claims 6 to 9, wherein the corrosion inhibitor is morpholine.

**11.** The rust and corrosion preventive antifreeze fluid as claimed in claim 9, wherein, in the formula (I), n is an integer of 3 to 50 and $R^1$ is a 1,2-ethylene group or a 1,2-propylene group.

**12.** The rust and corrosion preventive antifreeze fluid as claimed in claim 11, wherein, in the formula (I), n is an integer of 3 to 15.

**13.** The rust and corrosion preventive antifreeze fluid as claimed in claim 12, wherein, in the formula (I), n is an integer of 5, $R^1$ is a 1,2-propylene group and $R^2$ is a hydrogen, the corrosion inhibitor is morpholine and which further comprises an alkylene glycol which is propylene glycol.

**14.** A rust and corrosion preventive water-glycol type fluid comprising

(a) 100 parts by weight in total of a rust and corrosion preventive compound and water with the proviso that the weight ratio of the rust and corrosion preventive compound to water is from 80:20 to 20:80, said rust and corrosion preventive compound having the following formula:

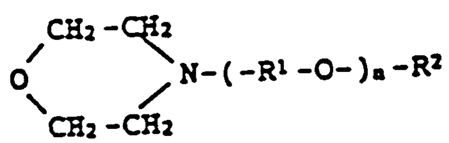

(I)

wherein

n is an integer of 1 to 300,

each $R^1$ is an alkylene group of 2 to 4 carbon atoms, an arylene group of 6 to 30 carbon atoms or a cycloalkylene group of 6 to 30 carbon atoms, with the proviso that the $R^1$ groups are identical with or different from one another, and

$R^2$ is a hydrogen atom, an alkyl group of 1 to 30 carbon atoms, an aryl group of 6 to 30 carbon atoms or a cycloalkyl group of 6 to 30 carbon atoms,

(b) from 0 to 100 parts by weight of an alkylene glycol,

(c) from 3 to 80 parts by weight of a thickener,

(d) from 1 to 50 parts by weight of an oiliness improver, and

(e) from 0 to 10 parts by weight of a corrosion inhibitor.

**15.** The rust and corrosion preventive water-glycol type fluid as claimed in claim 14 wherein $R^1$ is selected from the group consisting of a 1,2-propylene group, a 1,2-butylene group, a 2,3-butylene group, a 1,3-butylene group, a 1,4-butylene group, a 1,3-propylene group, a 2-methyl-1,4-phenylene group, a 2,3-dimethyl-1,4-phenylene group, a 2-ethyl-1,4-phenylene group, 2-propyl-1,4-phenylene group, a 4-methyl-1,3-phenylene group, a 5-methyl-1,3,-phenylene group, a 3-methyl-1,2-phenylene group, a 4-methyl-1,2-phenylene group, a 1,4-naphthylene group, a 2,5-naphthylene group, a 1,4-cyclohexylene group, a 1,3-cyclohexylene group, a 1,2-cyclohexylene group, 1,5-cyclooctylene group, a 1,4-cyclooctylene group, a 1,3-cyclooctylene group, a 1,2-cyclooctylene group, a decalin-1,2-diyl group, a decalin-1,3-diyl group, a decalin-1,4-diyl group and a decalin-2,5-diyl group and $R^2$ is selected from the group consisting of a methyl group, an ethyl group, a n-propyl group, an isopropyl group, a n-butyl group, an isobutyl group, a sec-butyl group, a tert-butyl group, a pentyl group, an isopentyl group, a sec-pentyl group, a neopentyl group, a tert-pentyl group, a n-hexyl group, an isohexyl group, a heptyl group, an octyl group, a nonyl group, a decyl group, an undecyl group, a dodecyl group, a tetradecyl group, an octodecyl group, an eicosyl group, a benzyl group, a phenethyl group, a phenylpropyl group, a cyclohexylethyl group, a phenyl group, an o-methylphenyl group, a m-methylphenyl group, a p-methylphenyl group, a p-ethylphenyl group, a p-butyl phenyl group, a p-octylphenyl group, a 1-naphthyl group, a 2-naphthyl group, a methyl naphthyl group, a cyclohexyl group, a cycloheptyl group, a cyclooctyl group, a cyclodecyl group, a cyclododecyl group, a decalin-1-yl group, a decalin-2-yl group, a methylcyclohexyl group, an ethylcyclohexyl group and an octylcyclohexyl group.

**16.** The rust and corrosion preventive water-glycol type fluid as claimed in claim 14, wherein, in the formula (I), n is an integer having a value of 2 to 100, $R^1$ is an alkylene group of 2 to 4 carbon atoms, and $R^2$ is a hydrogen atom.

**17.** The rust and corrosion preventive water-glycol type fluid as claimed in any of the claims 14 to 16, wherein the alkylene glycol is at least one selected from the group consisting of ethylene glycol, diethylene glycol, propylene glycol, dipropylene glycol and butylene glycol.

**18.** The rust and corrosion preventive water-glycol type fluid as claimed in any of the claims 14 to 17, wherein the thickener is an ethylene oxide-propylene oxide copolymer having a molecular weight of about 2,000 to 50,000.

**19.** The rust and corrosion preventive water-glycol type fluid as claimed in any of the claims 14 to 18, wherein the oiliness improver is at least one selected from the group consisting of a monocarboxylic acid, a polycarboxylic acid and a salt thereof with an alkali hydroxide, an alkylamine or an alkanolamine.

**20.** The rust and corrosion preventive water-glycol type fluid as claimed in claim 16, wherein, in the formula (I), n is an integer of 3 to 50 and $R^1$ is a 1,2-ethylene group or a 1,2-propylene group.

**21.** The rust and corrosion preventive water-glycol type fluid as claimed in claim 20, wherein, in the formula (I), n is an integer of 3 to 15.

**22.** The rust and corrosion preventive water-glycol type fluid as claimed in claim 21, wherein the alkylene glycol is propylene glycol, the thickener is an ethylene oxide-propylene oxide copolymer, the oiliness improver is a mixture of potassium salts of fatty acids, and the corrosion inhibitor is morpholine.

**23.** The rust and corrosion preventive water-glycol type fluid as claimed in any of the claims 14 to 22, further comprising an extreme pressure agent.

**24.** A rust and corrosion preventive lubricant comprising:

(a) a rust and corrosion preventive compound of the following formula:

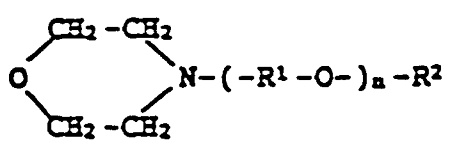

(I)

wherein

n is an integer of 1 to 300,

each $R^1$ is an alkylene group of 2 to 4 carbon atoms, an arylene group of 6 to 30 carbon atoms or a cycloalkylene group of 6 to 30 carbon atoms, with the proviso that the $R^1$ groups are identical with or different from one another, and

$R^2$ is a hydrogen atom, an alkyl group of 1 to 30 carbon atoms, an aryl group of 6 to 30 carbon atoms or a cycloalkyl group of 6 to 30 carbon atoms, and
(b) a lubricating oil or a lubricating base oil, the lubricating base oil being selected from the group consisting of a mineral oil and a synthetic oil.

**25.** The rust and corrosion preventive lubricant as claimed in claim 24, wherein $R^1$ is selected from the group consisting of a 1,2-propylene group, a 1,2-butylene group, a 2,3-butylene group, a 1,3-butylene group, a 1,4-butylene group, a 1,3-propylene group, a 2-methyl-1,4-phenylene group, a 2,3-dimethyl-1,4-phenylene group, a 2-ethyl-1,4-phenylene group, 2-propyl-1,4-phenylene group, a 4-methyl-1,3-phenylene group, a 5-methyl-1,3,-phenylene group, a 3-methyl-1,2-phenylene group, a 4-methyl-1,2-phenylene group, a 1,4-naphthylene group, a 2,5-naphthylene group, a 1,4-cyclohexylene group, a 1,3-cyclohexylene group, a 1,2-cyclohexylene group, 1,5-cyclooctylene group, a 1,4-cyclooctylene group, a 1,3-cyclooctylene group, a 1,2-cyclooctylene group, a decalin-1,2-diyl group, a decalin-1,3-diyl group, a decalin-1,4-diyl group and a decalin-2,5-diyl group and $R^2$ is selected from the group consisting of a methyl group, an ethyl group, a n-propyl group, an isopropyl group, a n-butyl group, an isobutyl group, a sec-butyl group, a tert-butyl group, a pentyl group, an isopentyl group, a sec-pentyl group, a neopentyl group, a tert-pentyl group, a n-hexyl group, an isohexyl group, a heptyl group, an octyl group, a nonyl group, a decyl group, an undecyl group, a dodecyl group, a tetradecyl group, an octodecyl group, an eicosyl group, a benzyl group, a phenethyl group, a phenylpropyl group, a cyclohexylethyl group, a phenyl group, an o-methylphenyl group, a m-methylphenyl group, a p-methylphenyl group, a p-ethylphenyl group, a p-butyl phenyl group, a p-octylphenyl group, a 1-naphthyl group, a 2-naphthyl group, a methyl naphthyl group, a cyclohexyl group, a cycloheptyl group, a cyclooctyl group, a cyclodecyl group, a cyclododecyl group, a decalin-1-yl group, a decalin-2-yl group, a methylcyclohexyl group, an ethylcyclohexyl group and an octylcyclohexyl group.

**26.** The rust and corrosion preventive lubricant as claimed in claim 24 or 25, wherein, in the formula (I), n is an integer of 2 to 100, $R^1$ is an alkylene group of 2 to 4 carbon atoms, and $R^2$ is a hydrogen atom.

**27.** The rust and corrosion preventive lubricant as claimed in claim 26, wherein, in the formula (I), n is an integer of 3 to 50 and $R^1$ is a 1,2-ethylene group or a 1,2-propylene group.

**28.** The rust and corrosion preventive lubricant as claimed in claim 27, wherein, in the formula (I), n is an integer of 3 to 15.

**29.** The rust and corrosion preventive lubricant as claimed in claim 28, wherein in the formula (I), n is an integer of 5 and $R^1$ is a 1,2-propylene group, and said (b) is a lubricating base oil which is a mineral oil.

**Patentansprüche**

**1.** Verwendung einer Verbindung der nachstehenden Formel:

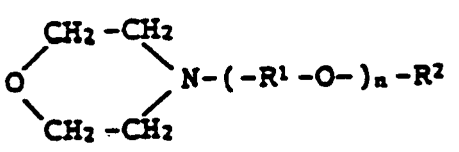

(I)

worin
n eine ganze Zahl von 3 bis 300 ist,
jedes $R^1$ eine Alkylengruppe mit 2 bis 4 Kohlenstoffatomen, eine Arylengruppe mit 6 bis 30 Kohlenstoffatomen oder eine Cycloalkylengruppe mit 6 bis 30 Kohlenstoffatomen bedeutet, mit der Maßgabe, daß die Gruppen $R^1$ miteinander identisch oder voneinander verschieden sind, und
$R^2$ ein Wasserstoffatom, eine Alkylgruppe mit 1 bis 30 Kohlenstoffatomen, eine Arylgruppe mit 6 bis 30 Kohlenstoffatomen oder eine Cycloalkylgruppe mit 6 bis 30 Kohlenstoffatomen bedeutet,
als Komponente eines rost- und korrosionsverhindernden, wässrigen Fluids.

2. Verwendung nach Anspruch 1, wobei $R^1$ aus der Gruppe der folgenden ausgewählt ist: der 1,2-Propylengruppe, 1,2-Butylengruppe, 2,3-Butylengruppe, 1,3-Butylengruppe, 1,4-Butylengruppe, 1,3-Propylengruppe, 2-Methyl-1,4-phenylengruppe, 2,3-Dimethyl-1,4-phenylengruppe, 2-Ethyl-1,4-phenylengruppe, 2-Propyl-1,4-phenylengruppe, 4-Methyl-1,3-phenylengruppe, 5-Methyl-1,3-phenylengruppe, 3-Methyl-1,2-phenylengruppe, 4-Methyl-1,2-phenylengruppe, 1,4-Naphthylengruppe, 2,5-Naphthylengruppe, 1,4-Cyclohexylengruppe, 1,3-Cyclohexylengruppe, 1,2-Cyclohexylengruppe, 1,5-Cyclooctylengruppe, 1,4-Cyclooctylengruppe, 1,3-Cyclooctylengruppe, 1,2-Cyclooctylengruppe, Decalin-1,2-diyl-Gruppe, Decalin-1,3-diyl-Gruppe, Decalin-1,4-diyl-Gruppe, und Decalin-2,5-diyl-Gruppe und $R^2$ aus der Gruppe der folgenden ausgewählt ist: einer Methylgruppe, Ethylgruppe, n-Propylgruppe, Isopropylgruppe, n-Butylgruppe, Isobutylgruppe, sec-Butylgruppe, tert.-Butylgruppe, Pentylgruppe, Isopentylgruppe, sec.-Pentylgruppe, Neopentylgruppe, tert.-Pentylgruppe, n-Hexylgruppe, Isohexylgruppe, Heptylgruppe, Octylgruppe, Nonylgruppe, Decylgruppe, Undecylgruppe, Dodecylgruppe, Tetradecylgruppe, Octadecylgruppe, Eicosylgruppe, Benzylgruppe, Phenethylgruppe, Phenylpropylgruppe, Cyclohexylethylgruppe, Phenylgruppe, o-Methylphenylgruppe, m-Methylphenylgruppe, p-Methylphenylgruppe, p-Ethylphenylgruppe, p-Butylphenylgruppe, p-Octylphenylgruppe, 1-Naphthylgruppe, 2-Naphthylgruppe, Methylnaphthylgruppe, Cyclohexylgruppe, Cycloheptylgruppe, Cyclooctylgruppe, Cyclodecylgruppe, Cyclododecylgruppe, Decalin-1-yl-Gruppe, Decalin-2-yl-Gruppe, Methylcyclohexylgruppe, Ethylcyclohexylgruppe und Octylcyclohexylgruppe.

3. Verwendung nach Anspruch 1, wobei in Formel (I) $R^1$ eine Alkylengruppe mit 2 bis 4 Kohlenstoffatomen und $R^2$ ein Wasserstoffatom bedeuten.

4. Verwendung nach Anspruch 3, wobei in Formel (I) n eine ganze Zahl von 3 bis 50 ist und $R^1$ eine 1,2-Ethylengruppe oder eine 1,2-Propylengruppe ist.

5. Verwendung nach Anspruch 4, wobei in Formel (I) n eine ganze Zahl von 3 bis 15 ist.

6. Rost- und korrosionsverhinderndes Gefrierschutzfluid, enthaltend:

(a) 100 Gewichtsteile einer rost- und korrosionsverhindernden Verbindung der nachstehenden Formel:

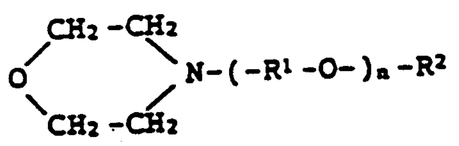

(I)

worin

n eine ganze Zahl von 1 bis 300 ist,

jedes $R^1$ eine Alkylengruppe mit 2 bis 4 Kohlenstoffatomen, eine Arylengruppe mit 6 bis 30 Kohlenstoffatomen oder eine Cycloalkylengruppe mit 6 bis 30 Kohlenstoffatomen bedeutet, mit der Maßgabe, daß die Gruppen $R^1$ identisch miteinander oder voneinander verschieden sind und

$R^2$ ein Wasserstoffatom, eine Alkylgruppe mit 1 bis 30 Kohlenstoffatomen, eine Arylgruppe mit 6 bis 30 Kohlenstoffatomen oder eine Cycloalkylgruppe mit 6 bis 30 Kohlenstoffatomen bedeutet,

(b) 5 bis 20000 Gewichtsteile Wasser und

(c) 0,1 bis 10 Gewichtsteile eines Korrosionsinhibitors.

7. Rost- und korrosionsverhinderndes Frostschutzfluid nach Anspruch 6, wobei $R^1$ aus der Gruppe der folgenden ausgewählt ist: der 1,2-Propylengruppe, 1,2-Butylengruppe, 2,3-Butylengruppe, 1,3-Butylengruppe, 1,4-Butylengruppe, 1,3-Propylengruppe, 2-Methyl-1,4-phenylengruppe, 2,3-Dimethyl-1,4-phenylengruppe, 2-Ethyl-1,4-phenylengruppe, 2-Propyl-1,4-phenylengruppe, 4-Methyl-1,3-phenylengruppe, 5-Methyl-1,3-phenylengruppe, 3-Methyl-1,2-phenylengruppe, 4-Methyl-1,2-phenylengruppe, 1,4-Naphthylengruppe, 2,5-Naphthylengruppe, 1,4-Cyclohexylengruppe, 1,3-Cyclohexylengruppe, 1,2-Cyclohexylengruppe, 1,5-Cyclooctylengruppe, 1,4-Cyclooctylengruppe, 1,3-Cyclooctylengruppe, 1,2-Cyclooctylengruppe, Decalin-1,2-diyl-Gruppe, Decalin-1,3-diyl-Gruppe, Decalin-1,4-diyl-Gruppe, und Decalin-2,5-diyl-Gruppe und $R^2$ aus dar Gruppe der folgenden ausgewählt ist: einer Methylgruppe, Ethylgruppe, n-Propylgruppe, Isopropylgruppe, n-Butylgruppe, Isobutylgruppe, sec-Butylgruppe, tert.-Butylgruppe,

Pentylgruppe, Isopentylgruppe, sec.-Pentylgruppe, Neopentylgruppe, tert.-Pentylgruppe, n-Hexylgruppe, Isohexylgruppe, Heptylgruppe, Octylgruppe, Nonylgruppe, Decylgruppe, Undecylgruppe, Dodecylgruppe, Tetradecylgruppe, Octadecylgruppe, Eicosylgruppe, Benzylgruppe, Phenethylgruppe, Phenylpropylgruppe, Cyclohexylethylgruppe, Phenylgruppe, o-Methylphenylgruppe, m-Methylphenylgruppe, p-Methylphenylgruppe, p-Ethylphenylgruppe, p-Butylphenylgruppe, p-Octylphenylgruppe, 1-Naphthylgruppe, 2-Naphthylgruppe, Methylnaphthylgruppe, Cyclohexylgruppe, Cycloheptylgruppe, Cyclooctylgruppe, Cyclodecylgruppe, Cyclododecylgruppe, Decalin-1-yl-Gruppe, Decalin-2-yl-Gruppe, Methylcyclohexylgruppe, Ethylcyclohexylgruppe und Octylcyclohexylgruppe.

8. Rost- und korrosionsverhinderndes Gefrierschutzfluid nach Anspruch 6, wobei in Formel (I) n eine ganze Zahl von 2 bis 100 ist, $R^1$ eine Alkylengruppe mit 2 bis 4 Kohlenstoff-atomen und $R^2$ ein Wasserstoffatom ist.

9. Rost- und korrosionsverhinderndes Gefrierschutzfluid nach Anspruch 8, wobei der Korrosionsinhibitor mindestens eine aus der aus Morpholin, Cyclohexylamin, Dicyclohexylamin, Monoethanolamin, Diethanolamin, Triethanolamin, Diisopropanolamin, Triisopropanolamin, Benzotriazol, Benzothiazol und Ethylendiamintetraessigsäure bestehenden Gruppe ausgewählte Verbindung ist.

10. Rost- und korrosionsverhinderndes Gefrierschutzfluid nach einem der Ansprüche 6 bis 9, wobei der Korrosionsinhibitor Morpholin ist.

11. Rost- und korrosionsverhindernde Gefrierschutzflüssigkeit nach Anspruch 9, wobei in Formel (I) n eine ganze Zahl von 3 bis 50 ist und $R^1$ eine 1,2-Ethylengruppe oder eine 1,2-Propylengruppe ist.

12. Rost- und korrosionsverhinderndes Gefrierschutzfluid nach Anspruch 11, wobei in Formel (I) n eine ganze Zahl von 3 bis 15 ist.

13. Rost- und korrosionsverhinderndes Gefrierschutzfluid nach Anspruch 12, wobei in Formel (I) n eine ganze Zahl von 5 ist, $R^1$ eine 1,2-Propylengruppe und $R^2$ ein Wasserstoffatom bedeuten, der Korrosionsinhibitor Morpholin ist und die Flüssigkeit weiterhin ein Alkylenglykol, welches Propylenglykol ist, enthält.

14. Rost- und korrosionsverhinderndes Fluid vom Wasser-Glykol-Typ, enthaltend

(a) insgesamt 100 Gewichtsteile einer rost- und korrosionsverhindernden Verbindung und Wasser, mit der Maßgabe, daß das Gewichtsverhältnis von rost- und korrosionsverhindernder Verbindung zu Wasser 80:20 bis 20:80 beträgt, wobei die rost- und korrosionsverhindernde Verbindung die nachstehende Formel hat:

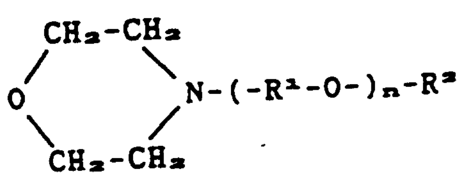

(I)

worin

n eine ganze Zahl von 1 bis 300 ist,

jedes $R^1$ eine Alkylengruppe mit 2 bis 4 Kohlenstoffatomen, eine Arylengruppe mit 6 bis 30 Kohlenstoffatomen oder eine Cycloalkylengruppe mit 6 bis 30 Kohlenstoffatomen bedeutet, mit der Maßgabe, daß die Gruppen $R^1$ miteinander identisch oder voneinander verschieden sind, und

$R^2$ ein Wasserstoffatom, eine Alkylgruppe mit 1 bis 30 Kohlenstoffatomen, eine Arylgruppe mit 6 bis 30 Kohlenstoffatomen oder eine Cycloalkylgruppe mit 6 bis 30 Kohlenstoffatomen bedeutet,

(b) 0 bis 100 Gewichtsteile eines Alkylenglykols,

(c) 3 bis 80 Gewichtsteile eines Verdickungsmittels,

(d) 1 bis 50 Gewichtsteile eines Mittels zum Verbessern der öligen Eigenschaft und

(e) 0 bis 10 Gewichtsteile eines Korrosionsinhibitors.

**15.** Rost- und korrosionsverhinderndes Fluid vom Wasser-Glycol-Typ nach Anspruch 14, wobei $R^1$ aus der Gruppe der folgenden ausgewählt ist: der 1,2-Propylengruppe, 1,2-Butylengruppe, 2,3-Butylengruppe, 1,3-Butylengruppe, 1,4-Butylengruppe, 1,3-Propylengruppe, 2-Methyl-1,4-phenylengruppe, 2,3-Dimethyl-1,4-phenylengruppe, 2-Ethyl-1,4-phenylengruppe, 2-Propyl-1,4-phenylengruppe, 4-Methyl-1,3-phenylengruppe, 5-Methyl-1,3-phenylengruppe, 3-Methyl-1,2-phenylengruppe, 4-Methyl-1,2-phenylengruppe, 1,4-Naphthylengruppe, 2,5-Naphthylengruppe, 1,4-Cyclohexylengruppe, 1,3-Cyclohexylengruppe, 1,2-Cyclohexylengruppe, 1,5-Cyclooctylengruppe, 1,4-Cyclooctylengruppe, 1,3-Cyclooctylengruppe, 1,2-Cyclooctylengruppe, Decalin-1,2-diyl-Gruppe, Decalin-1,3-diyl-Gruppe, Decalin-1,4-diyl-Gruppe, und Decalin-2,5-diyl-Gruppe und $R^2$ aus der Gruppe der folgenden ausgewählt ist: einer Methylgruppe, Ethylgruppe, n-Propylgruppe, Isopropylgruppe, n-Butylgruppe, Isobutylgruppe, sec-Butylgruppe, tert.-Butylgruppe, Pentylgruppe, Isopentylgruppe, sec.-Pentylgruppe, Neopentylgruppe, tert.-Pentylgruppe, n-Hexylgruppe, Isohexylgruppe, Heptylgruppe, Octylgruppe, Nonylgruppe, Decylgruppe, Undecylgruppe, Dodecylgruppe, Tetradecylgruppe, Octadecylgruppe, Eicosylgruppe, Benzylgruppe, Phenethylgruppe, Phenylpropylgruppe, Cyclohexylethylgruppe, Phenylgruppe, o-Methylphenylgruppe, m-Methylphenylgruppe, p-Methylphenylgruppe, p-Ethylphenylgruppe, p-Butylphenylgruppe, p-Octylphenylgruppe, 1-Naphthylgruppe, 2-Naphthylgruppe, Methylnaphthylgruppe, Cyclohexylgruppe, Cycloheptylgruppe, Cyclooctylgruppe, Cyclodecylgruppe, Cyclododecylgruppe, Decalin-1-yl-Gruppe, Decalin-2-yl-Gruppe, Methylcyclohexylgruppe, Ethylcyclohexylgruppe und Octylcyclohexylgruppe.

**16.** Rost- und korrosionsverhinderndes Fluid vom Wasser-Glykol-Typ nach Anspruch 14, wobei in Formel (I) n eine ganze Zahl mit einem Wert von 2 bis 100 ist, $R^1$ eine Alkylengruppe mit 2 bis 4 Kohlenstoffatomen und $R^2$ ein Wasserstoffatom bedeuten.

**17.** Rost- und korrosionsverhinderndes Fluid vom Wasser-Glykol-Typ nach einem der Ansprüche 14 bis 16, wobei das Alkylenglykol mindestens eine aus der Gruppe Ethylenglykol, Diethylenglykol, Propylenglykol, Dipropylenglykol und Butylenglykol ausgewählte Verbindung ist.

**18.** Rost- und korrosionsverhinderndes Fluid vom Wasser-Glykol-Typ nach einem der Anprüche 14 bis 17, wobei das Verdickungsmittel ein Ethylenoxid-Propylenoxid-Copolymer mit einem Molekulargewicht von etwa 2000 bis 50000 ist.

**19.** Rost- und korrosionsverhinderndes Fluid vom Wasser-Glykol-Typ nach einem der Ansprüche 14 bis 18, wobei das Mittel zum Verbessern der ölartigen Eigenschaft mindestens eine aus der aus Monocarbonsäuren, Polycarbonsäuren und deren Salze mit einem Alkalihydroxid, Alkylamin oder Alkanolamin bestehenden Gruppe ausgewählte Verbindung ist.

**20.** Rost- und korrosionsverhinderndes Fluid vom Wasser-Glykol-Typ nach Anspruch 16, wobei in Formel (I) n eine ganze Zahl von 3 bis 50 ist und $R^1$ eine 1,2-Ethylengruppe oder eine 1,2- Propylengruppe ist.

**21.** Rost- und korrosionsverhinderndes Fluid vom Wasser-Glykol-Typ nach Anspruch 20, wobei in Formel (I) n eine ganze Zahl von 3 bis 15 ist.

**22.** Rost- und korrosionsverhinderndes Fluid vom Wasser-Glykol-Typ nach Anspruch 21, wobei das Alkylenglykol Propylenglykol ist, das Verdickungsmittel ein Ethylenoxid-Propylenoxid-Copolymer ist, das Mittel zum Verbessern der ölartigen Eigenschaft ein Gemisch der Kaliumsalze von Fettsäuren ist und der Korrosionsinhibitor Morpholin ist.

**23.** Rost- und korrosionsverhinderndes Fluid vom Wasser-Glykol-Typ nach einem der Ansprüche 14 bis 22, die zusätzlich einen Hochdruck-Zusatz enthält.

**24.** Rost- und korrosionsverhinderndes Schmiermittel, enthaltend:

(a) eine rost- und korrosionsverhindernde Verbindung der nachstehenden Formel:

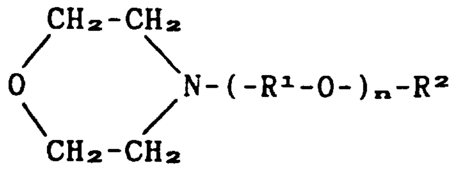

(I)

worin

n eine ganze Zahl von 1 bis 300 ist,

jedes $R^1$ eine Alkylengruppe mit 2 bis 4 Kohlenstoffatomen, eine Arylengruppe mit 6 bis 30 Kohlenstoffatomen oder eine Cycloalkylengruppe mit 6 bis 30 Kohlenstoffatomen bedeutet, mit der Maßgabe, daß die Gruppen $R^1$ miteinander identisch oder voneinander verschieden sind, und

$R^2$ ein Wasserstoffatom, eine Alkylgruppe mit 1 bis 30 Kohlenstoffatomen, eine Arylgruppe mit 6 bis 30 Kohlenstoffatomen oder eine Cycloalkylgruppe mit 6 bis 30 Kohlenstoffatomen bedeutet, und

(b) ein Schmieröl oder ein Grund-Schmieröl, wobei das Grund-Schmieröl aus der aus Mineralöl und synthetischem Öl bestehenden Gruppe ausgewählt ist.

**25.** Rost- und korrosionsverhinderndes Schmiermittel nach Anspruch 24, wobei $R^1$ aus der Gruppe der folgenden ausgewählt ist: der 1,2-Propylengruppe, 1,2-Butylengruppe, 2,3-Butylengruppe, 1,3-Butylengruppe, 1,4-Butylengruppe, 1,3-Propylengruppe, 2-Methyl-1,4-phenylengruppe, 2,3-Dimethyl-1,4-phenylengruppe, 2-Ethyl-1,4-phenylengruppe, 2-Propyl-1,4-phenylengruppe, 4-Methyl-1,3-phenylengruppe, 5-Methyl-1,3-phenylengruppe, 3-Methyl-1,2-phenylengruppe, 4-Methyl-1,2-phenylengruppe, 1,4-Naphthylengruppe, 2,5-Naphthylengruppe, 1,4-Cyclohexylengruppe, 1,3-Cyclohexylengruppe, 1,2-Cyclohexylengruppe, 1,5-Cyclooctylengruppe, 1,4-Cyclooctylengruppe, 1,3-Cyclooctylengruppe, 1,2-Cyclooctylengruppe, Decalin-1,2-diyl-Gruppe, Decalin-1,3-diyl-Gruppe, Decalin-1,4-diyl-Gruppe, und Decalin-2,5-diyl-Gruppe und $R^2$ aus der Gruppe der folgenden ausgewählt ist: einer Methylgruppe, Ethylgruppe, n-Propylgruppe, Isopropylgruppe, n-Butylgruppe, Isobutylgruppe, sec-Butylgruppe, tert.-Butylgruppe, Pentylgruppe, Isopentylgruppe, sec.-Pentylgruppe, Neopentylgruppe, tert.-Pentylgruppe, n-Hexylgruppe, Isohexylgruppe, Heptylgruppe, Octylgruppe, Nonylgruppe, Decylgruppe, Undecylgruppe, Dodecylgruppe, Tetradecylgruppe, Octadecylgruppe, Eicosylgruppe, Benzylgruppe, Phenethylgruppe, Phenylpropylgruppe, Cyclohexylethylgruppe, Phenylgruppe, o-Methylphenylgruppe, m-Methylphenylgruppe, p-Methylphenylgruppe, p-Ethylphenylgruppe, p-Butylphenylgruppe, p-Octylphenylgruppe, 1-Naphthylgruppe, 2-Naphthylgruppe, Methylnaphthylgruppe, Cyclohexylgruppe, Cycloheptylgruppe, Cyclooctylgruppe, Cyclodecylgruppe, Cyclododecylgruppe, Decalin-1-yl-Gruppe, Decalin-2-yl-Gruppe, Methylcyclohexylgruppe, Ethylcyclohexylgruppe und Octylcyclohexylgruppe.

**26.** Rost- und und korrosionsverhinderndes Schmiermittel nach Anspruch 24 oder 25, wobei in Formel (I) n eine ganze Zahl von 2 bis 100 ist, $R^1$ eine Alkylengruppe mit 2 bis 4 Kohlenstoffatomen bedeutet und $R^2$ ein Wasserstoffatom ist.

**27.** Rost- und und korrosionsverhinderndes Schmiermittel nach Anspruch 26, wobei in Formel (I) n eine ganze Zahl von 3 bis 50 ist und $R^1$ eine 1,2-Ethylengruppe oder 1,2-Propylengruppe ist.

**28.** Rost- und und korrosionsverhinderndes Schmiermittel nach Anspruch 27, wobei in Formel (I) n eine ganze Zahl von 3 bis 15 ist.

**29.** Rost- und und korrosionsverhinderndes Schmiermittel nach Anspruch 28, wobei in Formel (I) n die ganze Zahl 5 ist und $R^1$ eine 1,2-Propylengruppe ist und wobei Komponente (b) ein Mineralöl als Grund-Schmieröl ist.

**Revendications**

**1.** Utilisation, en tant que composant d'un fluide aqueux antirouille et anticorrosion, d'un composé ayant la formule suivante :

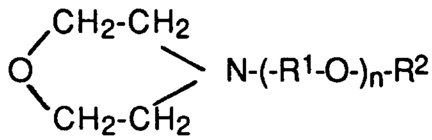

(I)

dans laquelle :

n est un nombre entier compris entre 3 et 300 inclus,

chaque $R^1$ est un radical alcoylène contenant 2 à 4 atomes de carbone, un radical arylène contenant 6 à 30 atomes de carbone ou un radical cycloalcoylène contenant 6 à 30 atomes de carbone, à condition que les radicaux $R^1$ soient identiques les uns aux autres ou différents les uns des autres, et

$R^2$ est un atome d'hydrogène, un radical alcoyle contenant 1 à 30 atomes de carbone, un radical aryle contenant 6 à 30 atomes de carbone ou un radical cycloalcoyle contenant 6 à 30 atomes de carbone.

**2.** Utilisation suivant la revendication 1, dans laquelle $R^1$ est choisi dans le groupe constitué par un radical 1,2-propylène, un radical 1,2-butylène, un radical 2,3-butylène, un radical 1,3-butylène, un radical 1,4-butylène, un radical 1,3-propylène, un radical 2-méthyl-1,4-phénylène, un radical 2,3-diméthyl-1,4-phénylène, un radical 2-éthyl-1,4-phénylène, un radical 2-propyl-1,4-phénylène, un radical 4-méthyl-1,3-phénylène, un radical 5-méthyl-1,3-phénylène, un radical 3-méthyl-1,2-phénylène, un radical 4-méthyl-1,2-phénylène, un radical 1,4-naphtylène, un radical 2,5-naphtylène, un radical 1,4-cyclohexylène, un radical 1,3-cyclohexylène, un radical 1,2-cyclohexylène, un radical 1,5-cyclooctylène, un radical 1,4-cyclooctylène, un radical 1,3-cyclooctylène, un radical 1,2-cyclooctylène, un radical décalin-1,2-diyle, un radical décalin-1,3-diyle, un radical décalin-1,4-diyle et un radical décalin-2,5-diyle et $R^2$ est choisi dans le groupe constitué par un radical méthyle, un radical éthyle, un radical n-propyle, un radical isopropyle, un radical n-butyle, un radical isobutyle, un radical sec-butyle, un radical tert-butyle, un radical pentyle, un radical isopentyle, un radical sec-pentyle, un radical néopentyle, un radical tert-pentyle, un radical n-hexyle, un radical isohexyle, un radical heptyle, un radical octyle, un radical nonyle, un radical décyle, un radical undécyle, un radical dodécyle, un radical tétradécyle, un radical octodécyle, un radical eicosyle, un radical benzyle, un radical phénéthyle, un radical phénylpropyle, un radical cyclohexyléthyle, un radical phényle, un radical o-méthylphényle, un radical m-méthylphényle, un radical p-méthylphényle, un radical p-éthylphényle, un radical p-butylphényle, un radical p-octylphényle, un radical 1-naphtyle, un radical 2-naphtyle, un radical méthylnaphtyle, un radical cyclohexyle, un radical cycloheptyle, un radical cyclooctyle, un radical cyclodécyle, un radical cyclododécyle, un radical décalin-1-yle, un radical décalin-2-yle, un radical méthylcyclohexyle, un radical éthylcyclohexyle et un radical octylcyclohexyle.

**3.** Utilisation suivant la revendication 1, dans laquelle, dans la formule (I), $R^1$ est un radical alcoylène contenant 2 à 4 atomes de carbone et $R^2$ est un atome d'hydrogène.

**4.** Utilisation suivant la revendication 3, dans laquelle, dans la formule (I), n est un nombre entier compris entre 3 et 50 inclus et $R^1$ est un radical 1,2-éthylène ou un radical 1,2-propylène.

**5.** Utilisation suivant la revendication 4, dans laquelle, dans la formule (I), n est un nombre entier compris entre 3 et 15 inclus.

**6.** Fluide antigel, antirouille et anticorrosion, comprenant :

(a) 100 parties en poids d'un composé antirouille et anticorrosion ayant la formule suivante :

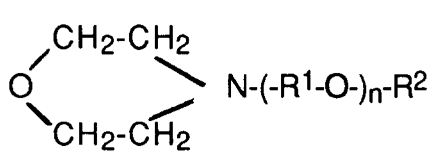

(I)

dans laquelle :

n est un nombre entier compris entre 1 et 300 inclus,

chaque $R^1$ est un radical alcoylène contenant 2 à 4 atomes de carbone, un radical arylène contenant 6 à 30 atomes de carbone ou un radical cycloalcoylène contenant 6 à 30 atomes de carbone, à condition que les radicaux $R^1$ soient identiques les uns aux autres ou différents les uns des autres, et

$R^2$ est un atome d'hydrogène, un radical alcoyle contenant 1 à 30 atomes de carbone, un radical aryle contenant 6 à 30 atomes de carbone ou un radical cycloalcoyle contenant 6 à 30 atomes de carbone,

(b) 5 à 20 000 parties en poids d'eau et

(c) 0,1 à 10 parties en poids d'un inhibiteur de corrosion.

**7.** Fluide antigel, antirouille et anticorrosion suivant la revendication 6, dans laquelle $R^1$ est choisi dans le groupe constitué par un radical 1,2-propylène, un, radical 1,2-butylène, un radical 2,3-butylène, un radical 1,3-butylène, un radical 1,4-butylène, un radical 1,3-propylène, un radical 2-méthyl-1,4-phénylène, un radical 2,3-diméthyl-1,4-phénylène, un radical 2-éthyl-1,4-phénylène, un radical 2-propyl-1,4-phénylène, un radical 4-méthyl-1,3-phénylène, un radical 5-méthyl-1,3-phénylène, un radical 3-méthyl-1,2-phénylène, un radical 4-méthyl-1,2-phénylène un radical 1,4-naphtylène, un radical 2,5-naphtylène, un radical 1,4-cyclohexylène, un radical 1,3-cyclohexylène, un radical 1,2-cyclohexylène, un radical 1,5-cyclooctylène, un radical 1,4-cyclooctylène, un radical 1,3-cyclooctylène, un radical 1,2-cyclooctylène, un radical décalin-1,2-diyle, un radical décalin-1,3-diyle, un radical décalin-1,4-diyle et un radical décalin-2,5-diyle et $R^2$ est choisi dans le groupe constitué par un radical méthyle, un radical éthyle, un radical n-propyle, un radical isopropyle, un radical n-butyle, un radical isobutyle, un radical sec-butyle, un radical tert-butyle, un radical pentyle, un radical isopentyle, un radical sec-pentyle, un radical néopentyle, un radical tert-pentyle, un radical n-hexyle, un radical isohexyle, un radical heptyle, un radical octyle, un radical nonyle, un radical décyle, un radical undécyle, un radical dodécyle, un radical tétradécyle, un radical octodécyle, un radical eicosyle, un radical benzyle, un radical phénéthyle, un radical phénylpropyle, un radical cyclohexyléthyle, un radical phényle, un radical o-méthylphényle, un radical m-méthylphényle, un radical p-méthylphényle, un radical p-éthylphényle, un radical p-butylphényle, un radical p-octylphényle, un radical 1-naphtyle, un radical 2-naphtyle, un radical méthylnaphtyle, un radical cyclohexyle, un radical cycloheptyle, un radical cyclooctyle, un radical cyclodécyle, un radical cyclododécyle, un radical décalin-1-yle, un radical décalin-2-yle, un radical méthylcyclohexyle, un radical éthylcyclohexyle et un radical octylcyclohexyle.

**8.** Fluide antigel, antirouille et anticorrosion suivant la revendication 6, dans lequel, dans la formule (I), n est un nombre entier compris entre 2 et 100 inclus, $R^1$ est un radical alcoylène contenant 2 à 4 atomes de carbone et $R^2$ est un atome d'hydrogène.

**9.** Fluide antigel, antirouille et anticorrosion suivant la revendication 8, dans lequel l'inhibiteur de corrosion est formé d'au moins un inhibiteur de corrosion choisi dans le groupe constitué par les morpholine, cyclohexylamine, dicyclohexylamine, monoéthanolamine, diéthanolamine, triéthanolamine, diisopropanolamine, triisopropanolamine, benzotriazole, benzothiazole et acide éthylènediaminetétraacétique.

**10.** Fluide antigel, antirouille et anticorrosion suivant l'une quelconque des revendications 6 à 9, dans lequel l'inhibiteur de corrosion est la morpholine.

**11.** Fluide antigel, antirouille et anticorrosion suivant la revendication 9, dans lequel, dans la formule (I), n est un nombre entier compris entre 3 et 50 inclus et $R^1$ est un radical 1,2-éthylène ou un radical 1,2-propylène.

**12.** Fluide antigel, antirouille et anticorrosion suivant la revendication 11, dans lequel, dans la formule (I), n est un nombre entier compris entre 3 et 15 inclus.

**13.** Fluide antigel, antirouille et anticorrosion suivant la revendication 12, dans lequel, dans la formule (I), n est un nombre entier égal à 5, $R^1$ est un radical 1,2-propylène et $R^2$ est un hydrogène, tandis que l'inhibiteur de corrosion est la morpholine, et qui comprend en outre un alcoylèneglycol qui est le propylèneglycol.

**14.** Fluide du type eau-glycol, antirouille et anticorrosion, comprenant :

(a) 100 parties en poids, au total, d'un composé antirouille et anticorrosion et d'eau, à condition que le rapport en poids du composé antirouille et anticorrosion à l'eau soit compris entre 80:20 et 20:80, le composé antirouille et anticorrosion ayant la formule suivante :

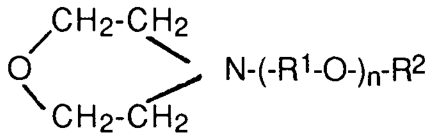

(I)

dans laquelle :

n est un nombre entier compris entre 1 et 300 inclus,

chaque $R^1$ est un radical alcoylène contenant 2 à 4 atomes de carbone, un radical arylène contenant 6 à 30 atomes de carbone ou un radical cycloalcoylène contenant 6 à 30 atomes de carbone, à condition que les radicaux $R^1$ soient identiques les uns aux autres ou différents les uns des autres, et

$R^2$ est un atome d'hydrogène, un radical alcoyle contenant 1 à 30 atomes de carbone, un radical aryle contenant 6 à 30 atomes de carbone ou un radical cycloalcoyle contenant 6 à 30 atomes de carbone,

(b) de 0 à 100 parties en poids d'un alcoylèneglycol,

(c) de 3 à 80 parties en poids d'un agent épaississant,

(d) de 1 à 50 parties en poids d'un agent améliorant le caractère huileux et

(e) de 0 à 10 parties en poids d'un inhibiteur de corrosion.

**15.** Fluide du type eau-glycol, antirouille et anticorrosion suivant la revendication 14, dans laquelle $R^1$ est choisi dans le groupe constitué par un radical 1,2-propylène, un radical 1,2-butylène, un radical 2,3-butylène, un radical 1,3-butylène, un radical 1,4-butylène, un radical 1,3-propylène, un radical 2-méthyl-1,4-phénylène, un radical 2,3-diméthyl-1,4-phénylène, un radical 2-éthyl-1,4-phénylène, un radical 2-propyl-1,4-phénylène, un radical 4-méthyl-1,3-phénylène, un radical 5-méthyl-1,3-phénylène, un radical 3-méthyl-1,2-phénylène, un radical 4-méthyl-1,2-phénylène, un radical 1,4-naphtylène, un radical 2,5-naphtylène, un radical 1,4-cyclohexylène, un radical 1,3-cyclohexylène, un radical 1,2-cyclohexylène, un radical 1,5-cyclooctylène, un radical 1,4-cyclooctylène, un radical 1,3-cyclooctylène, un radical 1,2-cyclooctylène, un radical décalin-1,2-diyle, un radical décalin-1,3-diyle, un radical décalin-1,4-diyle et un radical décalin-2,5-diyle et $R^2$ est choisi dans le groupe constitué par un radical méthyle, un radical éthyle, un radical n-propyle, un radical isopropyle, un radical n-butyle, un radical isobutyle, un radical sec-butyle, un radical tert-butyle, un radical pentyle, un radical isopentyle, un radical sec-pen tyle, un radical néopentyle, un radical tert-pentyle, un radical n-hexyle, un radical isohexyle, un radical heptyle, un radical octyle, un radical nonyle, un radical décyle, un radical undécyle, un radical dodécyle, un radical tétradécyle, un radical octodécyle, un radical eicosyle, un radical benzyle, un radical phénéthyle, un radical phénylpropyle, un radical cyclohexyléthyle, un radical phényle, un radical o-méthylphényle, un radical m-méthylphényle, un radical p-méthylphényle, un radical p-éthylphényle, un radical p-butylphényle, un radical p-octylphényle, un radical 1-naphtyle, un radical 2-naphtyle, un radical méthylnaphtyle, un radical cyclohexyle, un radical cycloheptyle, un radical cyclooctyle, un radical cyclodécyle, un radical cyclododécyle, un radical décalin-1-yle, un radical décalin-2-yle, un radical méthylcyclohexyle, un radical éthylcyclohexyle et un radical octylcyclohexyle.

**16.** Fluide du type eau-glycol, antirouille et anticorrosion suivant la revendication 14, dans lequel, dans la formule (I), n est un nombre entier ayant une valeur comprise entre 2 et 100 inclus, $R^1$ est un radical alcoylène contenant 2 à 4 atomes de carbone et $R^2$ est un atome d'hydrogène.

**17.** Fluide du type eau-glycol, antirouille et anticorrosion suivant l'une quelconque des revendications 14 à 16, dans lequel l'alcoylèneglycol est formé d'au moins un alcoylèneglycol choisi dans le groupe constitué par les éthylèneglycol, diéthylèneglycol, propylèneglycol, dipropylèneglycol et butylèneglycol.

**18.** Fluide du type eau-glycol, antirouille et anticorrosion suivant l'une quelconque des revendications 14 à 17, dans lequel l'agent épaississant est un copolymère oxyde d'éthylène-oxyde de propylène ayant un poids moléculaire compris entre 2 000 et 50 000 environ.

**19.** Fluide du type eau-glycol, antirouille et anticorrosion suivant l'une quelconque des revendications 14 à 18, dans lequel l'agent améliorant le caractère huileux est formé d'au moins un agent améliorant le caractère huileux choisi dans le groupe constitué par un acide monocarboxylique, un acide polycarboxylique et un sel d'un tel acide avec un hydroxyde alcalin, une alcoylamine ou une alcanolamine.

**20.** Fluide du type eau-glycol, antirouille et anticorrosion suivant la revendication 16, dans lequel, dans la formule (I), n est un nombre entier compris entre 3 et 50 inclus et $R^1$ est un radical 1,2-éthylène ou un radical 1,2-propylène.

**21.** Fluide du type eau-glycol, antirouille et anticorrosion suivant la revendication 20, dans lequel, dans la formule (I), n est un nombre entier compris entre 3-et 15 inclus.

**22.** Fluide du type eau-glycol, antirouille et anticorrosion suivant la revendication 21, dans lequel l'alcoylèneglycol est le propylèneglycol, l'agent épaississant est un copolymère oxyde d'éthylène-oxyde de propylène, l'agent améliorant le caractère huileux est un mélange de sels de potassium d'acides gras et l'inhibiteur de corrosion est la morpholine.

**23.** Fluide du type eau-glycol, antirouille et anticorrosion suivant l'une quelconque des revendications 14 à 22, comprenant en outre un agent extrême-pression.

**24.** Lubrifiant antirouille et anticorrosion comprenant :

(a) un composé antirouille et anticorrosion ayant la formule suivante :

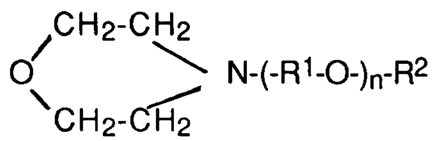

(I)

dans laquelle :

n est un nombre entier compris entre 1 et 300 inclus,

chaque $R^1$ est un radical alcoylène contenant 2 à 4 atomes de carbone, un radical arylène contenant 6 à 30 atomes de carbone ou un radical cycloalcoylène contenant 6 à 30 atomes de carbone, à condition que les radicaux $R^1$ soient identiques les uns aux autres ou différents les uns des autres, et

$R^2$ est un atome d'hydrogène, un radical alcoyle contenant 1 à 30 atomes de carbone, un radical aryle contenant 6 à 30 atomes de carbone ou un radical cycloalcoyle contenant 6 à 30 atomes de carbone, et

(b) une huile lubrifiante ou une huile à base de lubrifiant, l'huile à base de lubrifiant étant choisie dans le groupe constitué par une huile minérale et une huile synthétique.

**25.** Lubrifiant antirouille et anticorrosion suivant la revendication 24, dans laquelle $R^1$ est choisi dans le groupe constitué par un radical 1,2-propylène, un radical 1,2-butylène, un radical 2,3-butylène, un radical 1,3-butylène, un radical 1,4-butylène, un radical 1,3-propylène, un radical 2-méthyl-1,4-phénylène, un radical 2,3-diméthyl-1,4-phénylène, un radical 2-éthyl-1,4-phénylène, un radical 2-propyl-1,4-phénylène, un radical 4-méthyl-1,3-phénylène, un radical 5-méthyl-1,3-phénylène, un radical 3-méthyl-1,2-phénylène, un radical 4-méthyl-1,2-phénylène, un radical 1,4-naphtylène, un radical 2,5-naphtylène, un radical 1,4-cyclohexylène, un radical 1,3-cyclohexylène, un radical 1,2-cyclohexylène, un radical 1,5-cyclooctylène, un radical 1,4-cyclooctylène, un radical 1,3-cyclooctylène, un radical 1,2-cyclooctylène, un radical décalin-1,2-diyle, un radical décalin-1,3-diyle, un radical décalin-1,4-diyle et un radical décalin-2,5-diyle et $R^2$ est choisi dans le groupe constitué par un radical méthyle, un radical éthyle, un radical n-propyle, un radical isopropyle, un radical n-butyle, un radical isobutyle, un radical sec-butyle, un radical tert-butyle, un radical pentyle, un radical isopentyle, un radical sec-pentyle, un radical néopentyle, un radical tert-pentyle, un radical n-hexyle, un radical isohexyle, un radical heptyle, un radical octyle, un radical nonyle, un radical décyle, un radical undécyle, un radical dodécyle, un radical tétradécyle, un radical octodécyle, un radical eicosyle, un radical benzyle, un radical phénéthyle, un radical phénylpropyle, un radical cyclohexyléthyle, un radical phényle, un radical o-méthylphényle, un radical m-méthylphényle, un radical p-méthylphényle, un radical p-éthylphényle, un radical p-butylphényle, un radical p-octylphényle, un radical 1-naphtyle, un radical 2-naphtyle, un radical méthylnaphtyle, un radical cyclohexyle, un radical cycloheptyle, un radical cyclooctyle, un radical cyclodécyle, un radical cyclododécyle, un radical décalin-1-yle, un radical décalin-2-yle, un radical méthylcyclohexyle, un radical éthylcyclohexyle et un radical octylcyclohexyle.

**26.** Lubrifiant antirouille et anticorrosion suivant l'une des revendications 24 et 25, dans lequel, dans la formule (I), n est un nombre entier compris entre 2 et 100 inclus, $R^1$ est un radical alcoylène contenant 2 à 4 atomes de carbone et $R^2$ est un atome d'hydrogène.

**27.** Lubrifiant antirouille et anticorrosion suivant la revendication 26, dans lequel, dans la formule (I), n est un nombre entier compris entre 3 et 50 inclus et $R^1$ est un radical 1,2-éthylène ou un radical 1,2-propylène.

**28.** Lubrifiant antirouille et anticorrosion suivant la revendication 27, dans lequel, dans la formule (I), n est un nombre entier compris entre 3 et 15.

**29.** Lubrifiant antirouille et anticorrosion suivant la revendication 28, dans lequel, dans la formule (I), n est un nombre entier égal à 5 et $R^1$ est un radical 1,2-propylène et ledit composant (b) est une huile à base de lubrifiant qui est une huile minérale.